Europäisches Patentamt

European Patent Office

Office européen des brevets

(11) Veröffentlichungsnummer: **0 364 977**
**A1**

## (12) EUROPÄISCHE PATENTANMELDUNG

(21) Anmeldenummer: 89119316.1

(22) Anmeldetag: 18.10.89

(51) Int. Cl.⁵: **F16D 65/32 , F16B 39/10**

(30) Priorität: 21.10.88 DE 3835975

(43) Veröffentlichungstag der Anmeldung:
25.04.90 Patentblatt 90/17

(84) Benannte Vertragsstaaten:
DE FR GB IT NL SE

(71) Anmelder: **KNORR-BREMSE AG**
**Moosacher Strasse 80 Postfach 401060**
**D-8000 München 40(DE)**

(72) Erfinder: **Trzewik, Herbert**
**Hauptstrasse 25b**
**D-8048 Haimhausen(DE)**

(54) Verdrehsicherung für das Druckstück am Kolbenrohr eines Federspeicherbremszylinders für Fahrzeuge, insbesondere Nutzfahrzeuge.

(57) Bei einem Federspeicherbremszylinder (5) für Fahrzeuge, insbesondere Nutzfahrzeuge, ist ein mit dem Federspeicherkolben verbundenes, aus dem Zylindergehäuse sich erstreckendes Kolbenrohr (11) an seinem Ende mit einem End- oder Druckstück (13) verschlossen; das Druckstück (13) kann bei Kombination des Federspeicherbremszylinders (5) mit einem Betriebsbremszylinder (3) auf den Betätigungsmechanismus des Betriebsbremszylinders (3) einwirken. Das mit dem Kolbenrohr vorzugsweise verschraubte Druckstück (13) weist eine Vorrichtung auf, welche eine Verdrehung gegenüber dem Kolbenrohr und somit ein Loslösen von diesem verhindert. Die Vorrichtung besteht aus einem Haltering (33), welcher, zwischen einander zugewandten Anlageflächen des Druckstücks und des Kolbenrohrs befindlich, mittels Vorsprüngen (35, 37) in Ausnehmungen (25,31) von Druckstück und Kolbenrohr eingreift, derart, daß eine Relativdrehung des Druckstücks zum Kolbenrohr verhindert ist. Der Haltering (33) ist geschlitzt und wird nach Einschrauben des Druckstücks vom Außenumfang des Kolbenrohrs in seine Sperrlage zwischen Druckstück und Kolbenrohr abgeschoben.

# Fig.3

## Verdrehsicherung für das Druckstück am Kolbenrohr eines Federspeicherbremszylinders für Fahrzeuge, insbesondere Nutzfahrzeuge

Die Erfindung betrifft eine Verdrehsicherung nach dem Gattungsbegriff des Patentanspruchs 1.

Bei Federspeicherbremszylindern für Bremsanlagen von Fahrzeugen, insbesondere von Nutzfahrzeugen, welche allein oder in Verbindung mit Betriebsbremszylindern als sogenannte Kombizylinder bestehen, ist der Federspeicherkolben mit einem Kolbenrohr versehen, welches sich aus dem Zylindergehäuse bzw. einem Zwischenwandkörper erstreckt und mit einem End- bzw. Druckstück geschlossen ist. Als Endstück wirkt es bei Federspeicherbremszylindern direkt auf einen Bremsmechanismus ein oder kommt in Ausbildung als Druckstück bei Kombizylindern mit dem Mechanimus des Betriebsbremszylinders in Anlage. Wird das Druckstück in das Kolbenrohr des Federspeicherkolbens eingeschraubt, dann besteht die Gefahr des Lockerns; es kann zum vollständigen Lösen des Druckstücks und als Folge davon zu einem Zerstören des Mechanimus des Betriebsbremszylinders kommen.

Nimmt das Kolbenrohr an seinem vorderen, durch das Druckstück geschlossenen Ende einen Ventilmechanimus zum Belüften des Federspeicherraums des Federspeicherbremszylinders auf, dann ist es funktionell notwendig, daß das Druckstück einen feststehenden Abstand bezüglich des ihn aufnehmenden Kolbenrohrs des Federspeicherkolbens behält. Versuche, eine Verdrehsicherung dadurch sicherzustellen, daß in das Gewinde zwischen Druckstück und Kolbenrohrende bekannte Haftmittel eingebracht werden, haben nicht zu einem zufriedenstellenden Ergebnis geführt, d.h. die Gefahr des Lockerns ist nach wie vor vorhanden.

Es ist auch bekannt (DE-Gbm 85 22 567), das Druckstück und das Kolbenrohrende mittels radial sich erstreckender Arretierstifte zu sichern, welche in zugeordnete radiale Öffnungen am Druckstück und am Kolbenrohr einzugreifen vermögen und am Außenumfang durch einen O-Ring gesichert werden. Die Verwendung derartiger Sicherungsstifte ist problematisch, da sich der sie sichernde O-Ring nicht mit absoluter Sicherheit in seiner Position haltern läßt, zumindest ist ein beträchtlicher baulicher Aufwand erforderlich, um die Sicherungsstifte in ihrer Position zu halten.

Davon ausgehend besteht die Aufgabe der Erfindung darin, eine Verdrehsicherung der eingangs genannten Art mit baulich einfachen Mitteln so auszugestalten, daß ein Lockern des Druckstücks mit absoluter Sicherheit ausgeschlossen werden kann. Es soll im besonderen vermieden werden, daß während des Betriebes des Bremszylinders auftretende Schwingungen oder Stöße zu einem unbeabsichtigten Verdrehen des Druckstücks führen können. Die Montage und die Demontage der zur Sicherung dienenden Mittel soll gegebenenfalls auch am Fahrzeug selbst vollzogen werden können, ohne daß es besonderer Werkzeuge bedarf.

Zur Lösung dieser Aufgabe dienen die Merkmale nach dem Kennzeichnungsteil des Patentanspruches 1.

Der zwischen die Stirnseiten von Druckstück und Kolbenrohrende einführbare Haltering ist von sehr einfacher Konstruktion und kann mit einfachsten Mitteln gefertigt werden; gleichwohl ist er in seiner arretierenden Position absolut funktionssicher, da er durch seine eigene Federkraft am Umfang keine unbeabsichtigte Ausweitung erfahren kann. Er wird also mit absoluter Sicherheit in seiner Sperrlage gehalten, in welcher er mit seinen stirnseitigen Vorsprüngen in zugeordnete, axial fluchtende Ausnehmungen am Druckstück und am Kolbenrohrende eingreift. Die Montage des Halteringes ist ohne besondere Werkzeuge sehr einfach vorzunehmen, da er vom Außenumfang des Kolbenrohrs ausgehend in den Zwischenraum zwischen Druckstück und Kolbenrohrende abgeschoben werden kann und hierbei die erwünschte Sperrlage einnimmt.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Fig.1 ist eine Schnittansicht eines Kombizylinders für Nutzfahrzeuge, unter Darstellung eines in herkömmlicher Weise am Kolbenrohr angebrachten, d.h. verschraubten Druckstücks;

Fig.2 ist eine Ansicht des Druckstücks, des Halteringes und des im Längsschnitt wiedergegebenen Kolbenrohrendes gemäß der Erfindung, wobei die Teile vor ihrer Montage wiedergegeben sind;

Fig.3 ist eine Ansicht von Druckstück, Haltering und Kolbenrohrende nach ihrer Montage, wobei zusätzlich in gestrichelten Linien die Position des Halteringes am Außenumfanges des Kolbenrohres dargestellt ist, aus welcher er gemäß Pfeildarstellung in die Sperrlage verschiebbar ist; und

Fig.4 ist eine stirnseitige Ansicht des geschlitzten Halteringes nach der Erfindung.

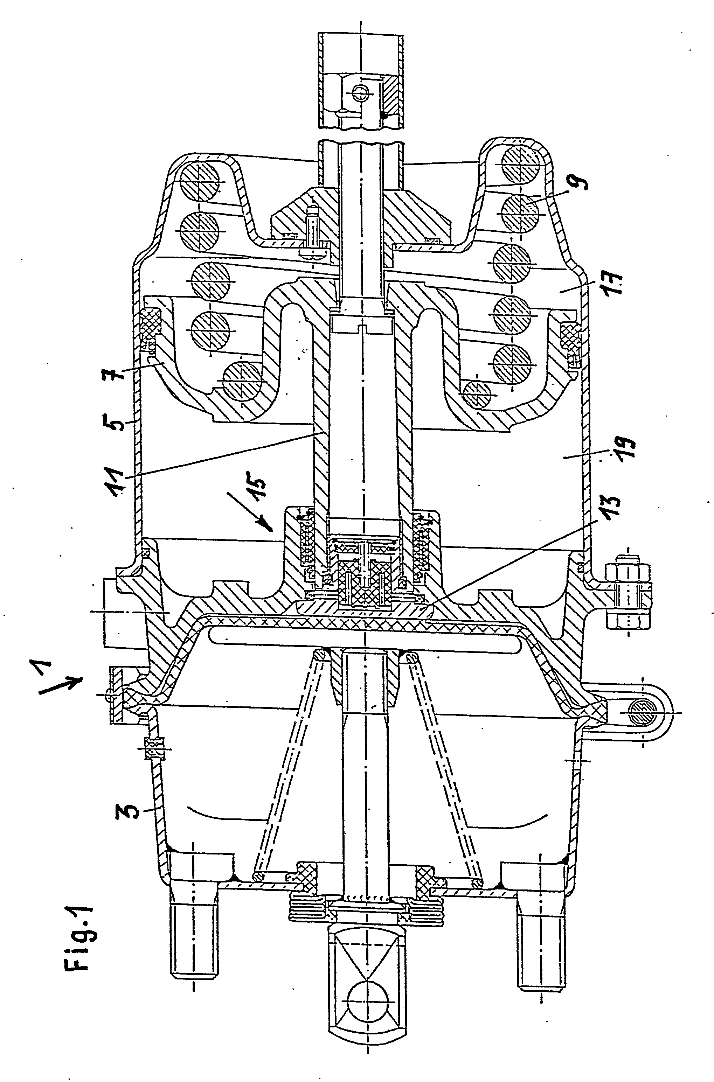

In Fig.1 der Zeichnung ist ein kombinierter Betriebsbrems- und Federspeicherbremszylinder für Nutzfahrzeuge dargestellt, welcher als Kombizylinder 1 bezeichnet ist. Der Kombizylinder 1 besteht aus dem Betriebsbremszylinder 3 und dem Federspeicherbremszylinder 5. Der Federspeicherbremszylinder 5 ist in seinem Inneren mit einem Kolben 7 versehen, welcher, unter der Verspannung einer Speicherfeder 9 stehend, ein Kolbenrohr 11 trägt. In das dem Betriebsbremszylinder 3 zugewandte Ende des Kolbenrohrs 11 ist ein Druckstück 13 eingesetzt, d.h. im vorliegenden Fall eingeschraubt. Im Bereich des vom Druckstück 13 begrenzten Endes des Kolbenrohrs 11 befindet sich ein Belüftungsventil 15 von an sich bekannter Konstruktion und Wirkungsweise; das Belüftungsventil 15 besitzt die Aufgabe, die Federspeicherkammer 17 zu belüften, wenn der Kolben 7 des Federspeicherbremszylinders 5 nach links gerichtet ausgefahren wird. Dies ist dann möglich, wenn über eine (nicht dargestellte) Anschlußverbindung der im Druckraum 19 des Federspeicherbremszylinders herrschende Druck abgebaut wird. Das Belüftungsventil 15 ist für den der vorliegenden Erfindung eigenen Gedanken nicht von Bedeutung, d.h. die nachstehend erläuterte Verdrehsicherung ist auch bei anderen Bremszylindern von beliebiger Konstruktion verwirklichbar. In gleicher Weise ist die Erfindung nicht auf die Verwendung bei Kombizylindern der dargestellten Konstruktion beschränkt, grundsätzlich ist der der Erfindung eigene Gedanken bei allen Betätigungszylindern einsetzbar, bei welchen ein aus einem Zylinder verschiebbar sich erstreckendes Kolbenrohr ein Endstück trägt, welches gegenüber Verdrehung abzusichern ist und welches z.B. auf einen Bremsbetätigungsmechanismus einwirkt. So sind z.B. Federspeicherbremszylinder im Einsatz, welche ohne den in der Zeichnung wiedergegebenen Betriebsbremszylinder wirksam sind. Auch bei Membranzylindern herkömmlicher Konstruktion ist das der Erfindung eigene Prinzip verwendbar; hierbei dient die Verdrehsicherung beispielsweise zur Halterung eines an einer Kolbenstange zu befestigenden Endstückes, welches mit einem Bremsenbetätigungsmechanismus in Verbindung steht.

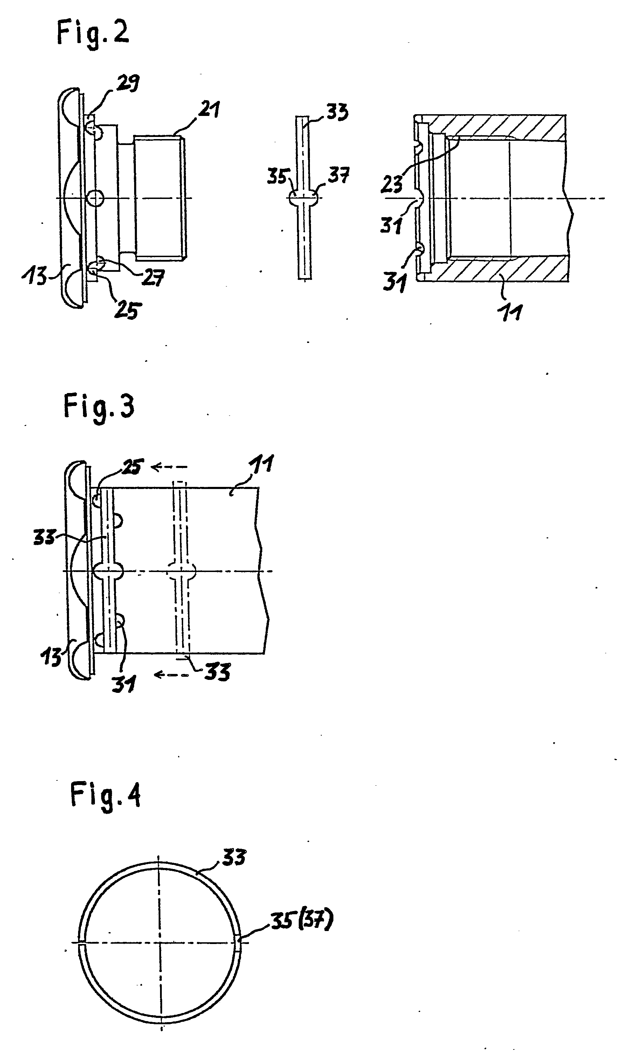

In den Fig.2-4 ist die erfindungsgemäße Einrichtung dargestellt, mittels welcher verhindert wird, daß sich das Druckstück 13 vom Kolbenrohr 11 löst, d.h. ungewollt losschrauben läßt. Gemäß Fig.2 weist das Druckstück 13, welches mittels eines Gewindes 21 in ein Gewinde 23 des Kolbenrohrs einschraubbar ist, mehrere in Richtung des Kolbenrohrs offene Ausnehmungen 25 auf, von welchen am Umfang des Druckstücks z.B. sechs vorhanden sein können. Die Ausnehmungen 25 bestehen beispielsweise als Abschnitte von Bohrungen 27, welche sich radial gerichtet in das Innere des Druckstücks erstrecken und Bestandteil einer Belüftungseinrichtung sein können. Durch Abdrehen des Bunds 29 auf einen geringeren Durchmesser sind hierbei halbseitig geöffnet die Ausnehmungen 25 gebildet. Die Ausnehmungen 25 können auch jedwede andere Konfiguration besitzen, was von den konstruktiven Gegebenheiten des Druckstücks und der wahlweisen Verwendung eines Belüftungsventils abhängen kann. An der gegenüberliegenden Seite, d.h. am Kolbenrohr 11, sind in gleicher Weise Ausnehmungen 31 vorgesehen. Im vorliegenden Ausführungsbeispiel sind acht derartige Ausnehmungen 31 an dem dem Druckstück zugewandten Stirnende des Kolbenrohrs ausgebildet. Infolge der unterschiedlichen Anzahl der Ausnehmungen 25 und 31 ist nach Einschrauben des Druckstücks 13 nur eine geringfügige Relativdrehung zwischen Druckstück und Kolbenrohr erforderlich, um wenigstens zwei Ausnehmungen miteinander in axiale Deckung zu bringen. Diese axiale Deckung ist erforderlich, um zwischen Druckstück und Kolbenrohr einen Haltering 33 aufzunehmen, welcher in der in Fig.3 wiedergegebenen Position mit an ihm ausgebildeten Vorsprüngen 35 und 37 in fluchtend zugeordnete Ausnehmungen 25 und 31 des Druckstücks und des Kolbenrohrs einrastet. In dieser in Fig.3 wiedergegebenen Position ist hierdurch eine Relativdrehung zwischen Druckstück und Kolbenrohr absolut sicher ausgeschlossen. Um den Haltering 33 in die in Fig.3 wiedergegebene Position zu bringen, ist er geschlitzt (Fig.4), er läßt sich also an seinem Umfang weiten und wird vor der Montage des Druckstücks auf das Kolbenrohr aufgeschoben. Nach seinem Aufbringen auf das Kolbenrohr wird das Druckstück in das Kolbenrohr eingeschraubt, vorzugsweise bis zum Endanschlag, und in eine Position gebracht, in welches sich zwei Ausnehmungen 25 und 31 in Fluchtung befinden. Der Haltering 33 wird sodann aus der in Fig.3 gestrichelt wiedergegebenen Postion in die mit ausgezogenen Linien wiedergegebene Arretierposition verschoben. In dieser Lage greifen die Vorsprünge 35 und 37 in die zugeordneten Ausnehmungen ein, eine Relativdrehung des Druckstücks bezüglich des Kolbenrohrs ist dadurch absolut sicher ausgeschlossen.

Im Rahmen des der Erfindung eigenen Gedankens können natürlich auch mehrere Vorsprünge an beiden Stirnseiten des Halterings 33 ausgebildet sein, welche jeweils in Ausnehmungen am Druckstück und am Kolbenrohr eingreifen. Ein selbsttätiges Losdrehen des Druckstücks ist absolut sicher ausgeschaltet, da der Haltering 33 nur mit Hilfe eines einfachen Werkzeuges aufgeweitet werden kann, um ihn zum Zwecke des Losdrehens des Druckstücks wieder auf den Außenumfang des Kolbenrohrs zurückzuschieben.

**Bezugszeichenliste**

1 Kombizylinder
3 Betriebsbremsylinder
5 Federspeicherbremszylinder

7 Kolben
9 Speicherfeder
11 Kolbenrohr
13 Druckstück
15 Belüftungsventil
17 Federspeicherkammer
19 Druckraum
21 Gewinde
23 Gewinde
25 Ausnehmung
27 Bohrung
29 Bund
31 Ausnehmung
33 Haltering
35 Vorsprung
37 Vorsprung

**Ansprüche**

1. Verdrehsicherung für das Druckstück am Kolbenrohr eines Federspeicherbremszylinders für Fahrzeuge, insbesondere Nutzfahrzeuge, gekennzeichnet durch am Druckstück (13) und am Ende des das Druckstück aufnehmenden Kolbenrohrs (11) befindliche, axial gerichtet einander zugewandte Ausnehmungen (25,31), und einen zwischen Druckstück und Ende des Kolbenrohrs einführbaren Haltering (33), welcher in Sperrlage mit an seinen beiden Stirnseiten befindlichen Vorsprüngen (35,37) in die Ausnehmungen (25,31) eingreift.

2. Verdrehsicherung nach Anspruch 1, dadurch gekennzeichnet, daß der Haltering (33) geschlitzt und zum Zwecke der Montage vom Außenumfang des Kolbenrohrs (11) in dem Freiraum zwischen Druckstück und Kolbenrohr einschiebbar ist.

3. Verdrehsicherung nach einem der vorangehenden Ansprüche, bei Verwendung eines in das Kolbenrohr einschraubbaren Druckstücks, dadurch gekennzeichnet, daß an den einander zugewandten Stirnseiten des Druckstücks und des Kolbenrohrendes mehrere Ausnehmungen ausgebildet sind, und daß der Haltering an seinen beiden Stirnseiten mehrere Vorsprünge trägt.

4. Verdrehsicherung nach einem der vorangehenden Ansprüche, dadurch gekennzeichnet, daß sich im Inneren des Druckstücks ein an sich bekanntes Belüftungsventil (15) befindet, mittels welchem die Federspeicherkammer (17) des Federspeicherbremszylinders bei Ausfahren des mit dem Federspeicherkolben verbundenen Kolbenrohrs (11) belüftbar ist.

5. Verdrehsicherung nach Anspruch 4, dadurch gekennzeichnet, daß die im Belüftungsventil vorgesehenen radialen Bohrungen in wenigstens einigen der Ausnehmungen (25) des Druckstücks enden.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. $\times$ 5 |
|---|---|---|---|
| A | DE - A1 - 3 218 881 <br> (ROBERT BOSCH GMBH) <br> * Ansprüche 1-6 * | 4 | F 16 D 65/32 <br> F 16 B 39/10 |
| A | DE - A1 - 3 507 740 <br> (HI SHEAR CORP.) <br> * Fig. 1-3 * | 1 | |
| A | GB - A - 2 103 323 <br> (WESTINGHOUSE ELECTRIC CORP.) <br> * Fig. 1 * | 2 | |
| A | US - A - 3 844 323 <br> (ANDERSON) <br> * Fig. 1 * | 2 | |
| A | US - A - 3 762 455 <br> (ANDERSON) <br> * Fig. 1 * | 2 | |

RECHERCHIERTE
SACHGEBIETE (Int. Cl.4)

F 16 D 65/00
F 16 B 39/00

Der vorliegende Recherchenbericht wurde für alle Patentansprüche erstellt.

| Recherchenort <br> WIEN | Abschlußdatum der Recherche <br> 21-12-1989 | Prüfer <br> KAMMERER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82